# EUROPÄISCHE PATENTSCHRIFT

(11) **EP 0 889 332 B1**
(45) Veröffentlichungstag und Bekanntmachung des Hinweises auf die Patenterteilung: **31.10.2001**
(21) Anmeldenummer: 97810416.4
(22) Anmeldetag: 30.06.1997
(51) Int. Cl.: G01V 8/20, F16P 3/14

(54) **Lichtschranke oder Lichtvorhang mit Ausrichthilfe**
Light curtain or light barrier with aligning aid
Rideau de lumière ou barrière optique avec dispositif d'alignement

(43) Veröffentlichungstag der Anmeldung: 07.01.1999
(73) Patentinhaber: Cedes AG, 7302 Landquart (CH)
(72) Erfinder: De Coi, Beat, 7320 Sargans (CH)
(74) Vertreter: Riederer, Conrad A., Dr.

(56) Entgegenhaltungen:
- EP-A- 0 598 630
- US-A- 3 752 978
- US-A- 4 650 990
- US-A- 5 393 973

## Beschreibung

Die vorliegende Erfindung betrifft ein Verfahren zum gegenseitigen geometrischen Ausrichten zweier einander gegenüberliegenden, jeweils ein oder mehrere Sender und Empfänger aufweisenden Leisten gemäss Oberbegriff von Anspruch 1 sowie eine Lichtschranke oder Lichtvorhang gemäss Oberbegriff von Anspruch 13.

Bekannt sind Laser-Ausrichthilfen als Zubehör zu Lichtschranken und Lichtvorhängen, welche zum Ausrichten an der Sender- oder der Empfängerleiste angebracht werden. Eine bekannte Ausrichthilfe ist batteriebetrieben und erzeugt auf 5 m Distanz einen Lichtfleck von weniger als 10 mm Durchmesser. Die Ausrichthilfe kann entlang der Leiste verschoben werden, sodass die Parallelität der Sender und der Empfängerleiste über die gesamte Schutzfeldhöhe überprüft werden kann. Ein gravierender Nachteil der vorbeschriebenen Ausrichthilfe ist allerdings, dass diese nur während der Zeit des Einstellens zur Verfügung steht. Ein weiterer Nachteil ist, dass mit einer einzigen Ausrichthilfe nicht gleichzeitig alle Freiheitsgrade der mechanischen Einstellung überprüft werden können. Nachteilig ist auch, dass bei einer einmal eingebauten Lichtschranke eine nachträgliche Überprüfung der gegenseitigen Ausrichtung wegen der eingeschränkten Zugänglichkeit derselben im allgemeinen nicht ohne weiteres vorgenommen werden kann, da der nötige Platz zum Anbringen der Ausrichthilfen in der Regel nicht vorhanden ist und/oder die Anlage während der Überprüfung stillgelegt werden muss.

Die Integration einer Ausrichthilfe in die die Sender und Empfänger enthaltenden Leisten wird allgemein als nicht wünschenswert angesehen, weil in diesem Fall die Ausrichtung nur an einer Stelle vorgenommen werden kann. Aus diesem Grund wird in der Praxis die oben erwähnte Ausrichthilfe, welche die gesamte Schutzfeldhöhe überprüfen kann und nicht integral mit der Lichtschranke ist, als die vorteilhaftere Lösung bevorzugt. Es ist zudem bekannt, dass auf dem Markt erhältliche Laserquellen eine bedeutend geringere Lebensdauer aufweisen als die in Lichtvorhängen eingesetzten optoelektronischen Elemente. Da bei permanentem Betrieb die Ausrichthilfe während der Lebensdauer der optoelektronischen Elemente gleich mehrmals ersetzt werden müsste, lässt auch dies die Integration von Laser-Ausrichthilfen in die Lichtschranken als nicht wünschenswert erscheinen.

Die EP-A-0 598 630 offenbart einen Lichtvorhang, bei welchem jedes Empfangselement mit wenigstens einer sichtbares Licht aussendenden Leuchtdiode gekoppelt ist. Empfängt ein Empfangselement ein Signal unterhalb eines bestimmten Schwellwerts, so leuchtet die Diode auf, sodass der Operateur aus der Ferne über den momentanen Zustand des Lichtvorhangs unterrichtet ist. Gemäss der EP-A-0 598 630 können die Leuchtdioden auch für die Justierung der Sender- und Empfängerleisten eingesetzt werden, indem die Leisten gegenseitig so ausgerichtet werden, dass alle Leuchtdioden leuchten.

Ein Nachteil der offenbarten Anordnung ist, dass zur Justierung des Lichtvorhangs die im Infrarot strahlenden Sender, welche den eigentlichen Lichtvorhang bilden, eingesetzt werden. Die Verwendung von im IR-Bereich strahlenden Sendern hat den Nachteil, dass die ausgesandte Strahlung nicht sichtbar ist und dass daher die Empfänger mit Leuchtdioden, die im sichtbaren Bereich strahlen, kombiniert werden müssen, um anzuzeigen, ob ein Empfänger Licht von einem Sender empfängt oder nicht. Noch ein Nachteil ist, dass mit gleichgerichteten Sendestrahlen nicht alle Freiheitsgrade einstellbar sind, sodass keine Gewähr für eine optimale gegenseitige Ausrichtung der Sender-/Empfängerleisten gegeben ist, wenn alle LED's leuchten.

Die US 3,752,978 beschreibt eine Lichtschranke mit lediglich einem Infrarot-Sender und einem zugehörigen Empfänger. Sender und Empfänger sind in je einer separaten Montageleiste angeordnet. Zwecks Verringerung der Bautiefe der Lichtschranke sind in den Leisten je ein Spiegel vorgesehen, welcher den Abtaststrahl in der Leiste jeweils rechtwinklig umlenkt. Zur anfänglichen Justage der Spiegel dient eine separate Lichtquelle mit sichtbarem Licht, welche an die Leisten montierbar ist. Die Ausrichtung des einen Spiegels in der einen Leiste erfolgt, indem die Lichtquelle an der anderen, gegenüberliegenden Leiste vor dem anderen Spiegel montiert und der eine Spiegel sodann so eingestellt wird, bis der Lichtstrahl der Lichtquelle auf den Sender resp. den Empfänger trifft. Da nur ein einzelner Messstrahl justiert werden muss, kommt es beim offenbarten Verfahren nicht auf die exakte Ausrichtung der beiden Leisten an.

Die US 3,752,978 lehrt, sämtliche Justierarbeiten vor Ort vorzunehmen und dafür eine unabhängige Justier-Lichtquelle einzusetzen. Dieses Verfahren eignet sich daher nicht, die Ausrichtung der Leisten in Zeitabständen zu wiederholen. Ein weiterer Nachteil ist, dass zur Einjustierung des Messstrahls die Lichtschranke ausser Betrieb gesetzt werden muss.

Es ist Aufgabe der vorliegenden Erfindung, ein Verfahren zum gegenseitigen geometrischen Ausrichten zweier einander gegenüberliegenden Sender- und Empfängerleisten und eine Lichtschranke mit Ausrichthilfe bereitzustellen, welche es erlauben, die Leisten rasch und zuverlässig aufeinander abzustimmen. Das Verfahren und die Ausrichthilfe sollen es ermöglichen, mehrere Freiheitsgrade gleichzeitig zu überwachen und einzustellen. Auch sollte die Ausrichthilfe eine Nachprüfung der gegenseitigen Ausrichtung der Leisten ohne grossen Aufwand erlauben.

Erfindungsgemäss besteht die Lösung im Verfahren gemäß Anspruch 1, bei welchem zum gegenseitigen Ausrichten der Leisten wenigstens zwei zueinander gegenläufige, in Abstand voneinander angeordnete Richtstrahlen des sichtbaren Spektralbereichs eingesetzt werden, wobei die Ausrichtung der von den Lichtquellen ausgesandten Richtstrahlen bezüglich der Leisten und den darin aufgenommenen Sendern und Empfängern bereits im Werk erfolgt, sodass vor Ort durch ein Ausrichten der Richtstrahlen auf die Detektions- oder Anzeigemittel die Sender/Empfängerpaare gegeneinander ausgerichtet werden.
Durch das Vorsehen von wenigstens zwei zueinander gegenläufigen und in Abstand voneinander angeordneten sichtbaren Richtstrahlen kann festgestellt werden, ob die Sender- und Empfängerkeulen koaxial sind oder nicht. Die beiden Richtstrahlen können von zwei separaten Lichtquellen stammen oder durch Umlenken und Reflektieren eines von einer einzelnen Lichtquelle stammenden Richtstrahls erzeugt werden. Zweckmässigerweise sind beide Richtstrahlen gleichzeitig in Betrieb. Auf diese Weise sind die durch die Justierung an der einen Leiste hervorgerufenen Auswirkungen auf die zweite Leiste unmittelbar sichtbar, sodass das Ausrichten der zwei Leisten im Vergleich zu bekannten Verfahren in einer wesentlich kürzeren Zeit vorgenommen werden kann. Mit Hilfe der Richtstrahlen, z.B. kontinuierlichen, gepulsten und gegebenenfalls modulierten Laser-Strahlen im sichtbaren Bereich, können auch Vibrationen und Dejustagen dargestellt werden. Solche Vibrationen oder Dejustagen zeigen sich als sogenannte Lissajous-Figuren, anhand welcher auch beurteilt werden kann, wie stark die Vibrationen sind und in welche Richtung diese wirken.

Gegenstand der vorliegenden Erfindung ist gemäß Anspruch 13 auch eine Lichtschranke oder ein Lichtvorhang mit einer Ausrichthilfe, mit - gemäss einer ersten Ausführungsform - wenigstens einer an der ersten Leiste angeordneten Lichtquelle des sichtbaren Spektralbereichs zur Erzeugung eines ersten sichtbaren Richtstrahls und an der zweiten Leiste angeordneten Umlenkmitteln zum Umlenken des ersten Richtstrahls und zur Erzeugung eines zweiten, gegenläufigen Richtstrahls in Abstand zum ersten Richtstrahl. Eine zweite erfindungsgemässe Ausführungsform ist gekennzeichnet durch wenigstens eine erste und eine zweite Lichtquelle jeweils des sichtbaren Spektralbereichs, welche an der ersten resp. zweiten Leiste angeordnet sind, zur Erzeugung von zwei zueinander gegenläufigen, in Abstand voneinander angeordneten sichtbaren Richtstrahlen. Beiden erfindungsgemässen Ausführungsformen ist gemeinsam, dass die Lichtquellen und Umlenkmittel so angeordnet sind, dass diese bezüglich der Sender und Empfänger eine definierte Lage einnehmen, sodass durch das Ausrichten der Richtstrahlen auf die Detektions- oder Anzeigemittel die Sender/Empfängerpaare gegeneinander ausgerichtet werden.

Vorteilhafte Ausführungsformen sind in den abhängigen Ansprüchen definiert.

Zweckmässigerweise sind die Umlenkmittel Spiegel, Prismen oder gleichwirkende Mittel und sind in der Leiste integriert. Vorteilhaft ist die Lichtquelle eine Laserquelle, welche im sichtbaren Bereich arbeitet und einen kontinuierlichen Lichtstrahl aussendet. Schnell gepulste oder modulierte Lichtquellen sind jedoch ebenso denkbar. Vorteilhaft ist die eine oder alle Lichtquellen in der oder den Leisten integriert. Dies hat den Vorteil, dass die Justierung der Lichtquellen bezüglich der Leisten und den darin enthaltenen Sensoren und Empfängern bereits im Werk erfolgen kann. Ausserdem stehen die Ausrichthilfen, wenn diese in den Leisten integriert sind, permanent zur Verfügung.

Eine besonders bevorzugte Ausführungsform sieht vor, dass in der einen Leiste wenigstens zwei Laser-Lichtquellen und in der gegenüberliegenden Leiste wenigstens eine Laser-Lichtquelle integriert sind. Diese Ausführungsform hat den grossen Vorteil, dass auch Torsionen des Schutzfeldes festgestellt werden können.

Die Detektions- oder Anzeigemittel können in einer bevorzugten Ausführungsform durch ein Fadenkreuz oder eine andere Markierung gebildet sein. Im einfachsten Fall kann die Ausrichtung der Leisten anhand des Auftreffpunktes auf der Stirnseite der Leiste, beispielsweise anhand des festgestellten Abstandes zum nächstgelegenen Empfänger, festgestellt werden. Grundsätzlich können als Detektionsmittel auch Photosensoren eingesetzt werden. Die optimale Ausrichtung kann dann anhand der durch den Photosensor gemessenen Intensität festgestellt werden. Zweckmässigerweise besitzt die Leiste einen Schalter, z.B. einen Berührungsschalter, zum Inbetriebsetzen der Ausrichthilfe. Der Schalter kann bei Vorhandensein von zwei oder mehreren Lichtquellen jeweils alle einschalten. Es können jedoch für jede Lichtquelle ein separater Schalter vorgesehen sein.

Nachfolgend werden Ausführungsbeispiele der Erfindung unter Bezugnahme auf die Figuren beschrieben. Es zeigt:
- Fig.1: eine perspektivische Ansicht einer bekannten Lichtschranke bestehend aus zwei einander gegenüberliegender Leisten mit einer Mehrzahl von Sender-/Empfängerpaaren;
- Fig.2: schematisch, eine erste erfindungsgemässe Ausführungsform einer Ausrichthilfe mit zwei Laser-Lichtquellen, die in der Sender- resp. der Empfängerleiste integriert sind;
- Fig. 3: schematisch, eine zweite erfindungsgemässe Ausführungsform einer Ausrichthilfe mit drei Laser-Lichtquellen;
- Fig. 4: schematisch, eine dritte erfindungsgemässe Ausführungsform einer Ausrichthilfe mit nur einer Laser-Lichtquelle und Umlenkspiegeln;
- Fig. 5: ein Ausführungsbeispiel eines Blockschaltbilds zur Steuerung der Ausrichthilfe; und
- Fig. 6: ein Flussdiagramm eines Programms zur Steuerung der Ausrichthilfe.

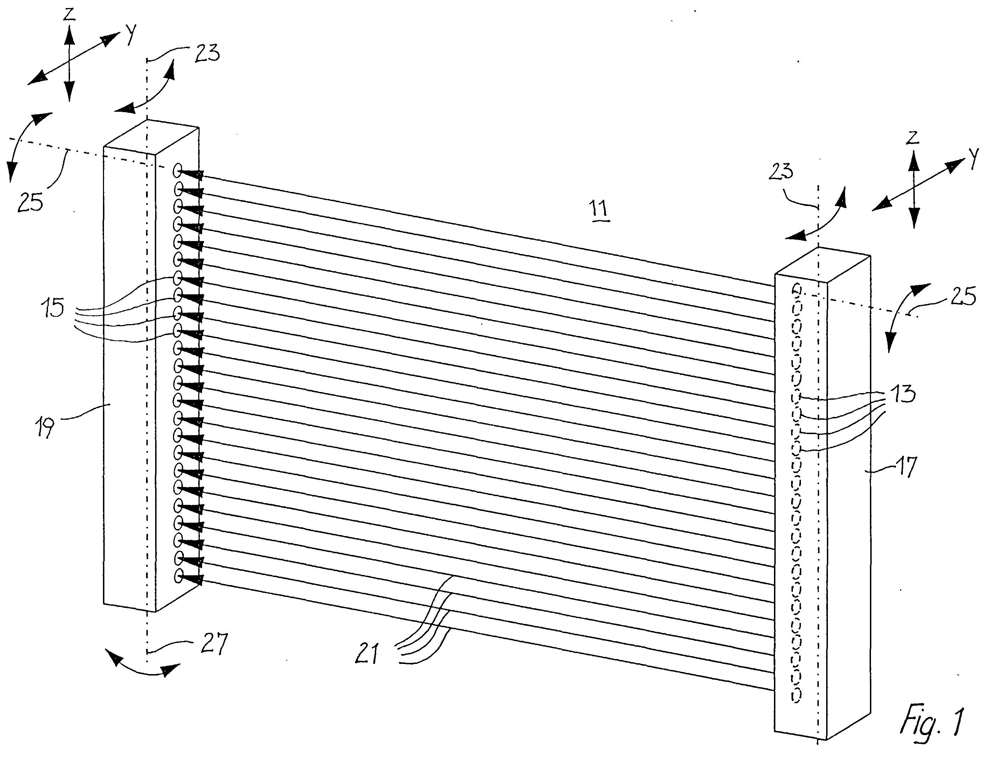

Die Figur 1 zeigt eine Lichtschranke 11 mit einer Mehrzahl von miteinander zusammenwirkenden Sendern 13 und Empfängern 15. Die Sender 13 und die Empfänger 15 sind jeweils in gleichmässigen oder ungleichmässigen Abständen voneinander an einer Senderleiste 17 respektive einer Empfängerleiste 19 angeordnet. Befindet sich ein Objekt im Strahlengang zwischen einem Sender 13 und einem Empfänger 15, d.h. ist wenigstens ein Lichtstrahl 21 unterbrochen, so wird durch eine nicht näher gezeigte Schaltung ein Schaltsignal ausgelöst.

Damit die vorbeschriebene Lichtschranke funktioniert, muss sich jeder Empfänger 15 im Strahlungsfeld (Sendekeule) des mit diesem zusammenwirkenden Senders 13 und jeder Sender 13 im Erfassungsbereich (Empfängerkeule) des mit diesem zusammenwirkenden Empfängers befinden. Dies ist in der Praxis oftmals schwierig zu erreichen, da jede Leiste 17,19 mehrere Freiheitsgrade besitzt, die eingestellt werden müssen, damit die vorgenannten Bedingungen für das Funktionieren der Lichtschranke erfüllt sind. Insbesondere bei Lichtvorhängen mit geringen Oeffnungswinkeln der Keulen, z.B. bei Lichtvorhängen mit grossen Reichweiten und bei Lichtvorhängen für Sicherheitsanwendungen ist dies besonders problematisch.

Wie insbesondere aus Figur 1 hervorgeht, muss jede Leiste 17,19 zunächst einmal in y- und z-Richtung ausgerichtet sein. Eine Justage muss aber auch bezüglich der Rotationsachsen 23 (sog. Gierwinkel) und 25 (sog. Rollwinkel) erfolgen. Darüberhinaus muss jede Leiste senkrecht ausgerichtet sein. Die Abweichung von der Senkrechten 27 wird durch den Nickwinkel ausgedrückt. Jede Leiste 17,19 besitzt also insgesamt fünf Freiheitsgrade. Jede Abweichung von der idealen Position beeinträchtigt die Funktionstüchtigkeit der Lichtschranke, indem ein oder mehrere Empfänger 15 nicht die maximale Lichtmenge empfangen, was im extremen Fall zum Versagen der Lichtschranke führen kann. Ein Versagen liegt beispielsweise dann vor, wenn die Lichtschranke das Eindringen eines Objekts meldet, obwohl keines da ist, und umgekehrt, kein Objekt detektiert, obwohl eines in den überwachten Bereich eingedrungen ist.

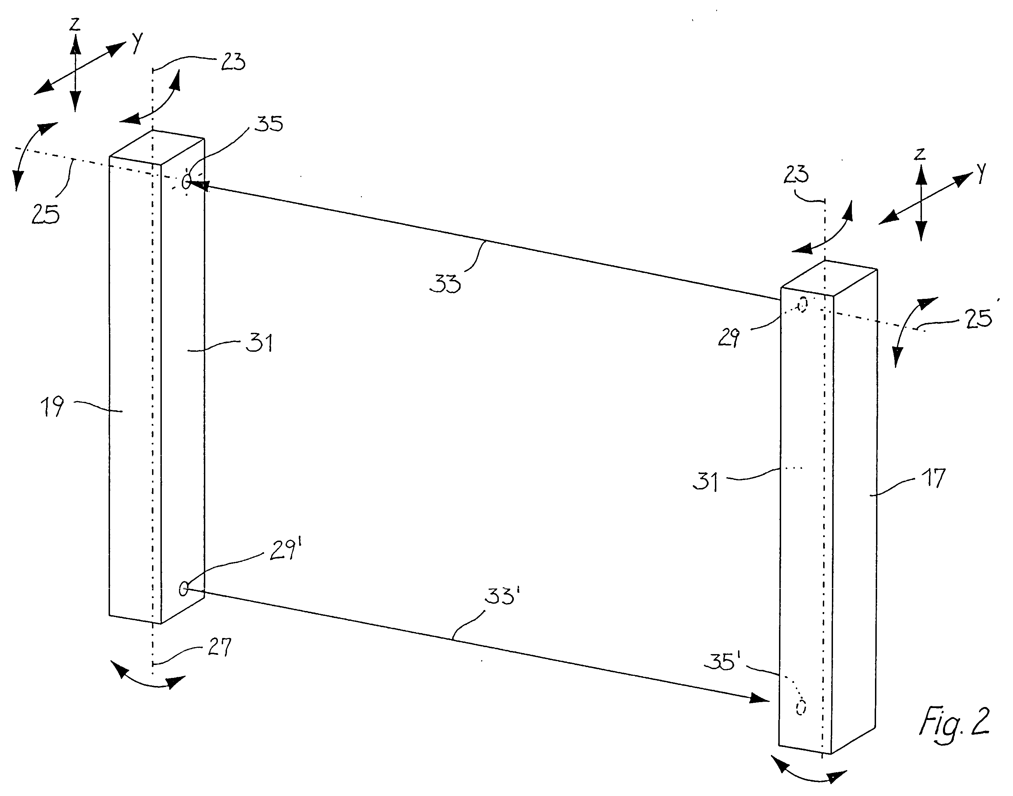

Gemäss einem ersten Ausführungsbeispiel (Fig. 2) einer Ausrichthilfe sind je eine Lichtquelle 29 resp. 29' in der Senderleiste 17 bzw. in der Empfängerleiste 19 vorgesehen. Die Lichtquellen 29,29' sind so ausgerichtet, dass diese im Betrieb je einen senkrecht zur Stirnfläche 31 verlaufenden Lichtstrahl 33 resp. 33' aussenden. Die Lichtstrahlen 33,33' verlaufen parallel zu den optischen Achsen resp. der Sende- oder Empfängerkeulen der in der Fig. 2 zum Zwecke der Vereinfachung der Darstellung nicht eingezeichneten Sender 13 und Empfänger 15. Jede Leiste 17,19 besitzt je einen Referenzpunkt 35 resp. 35', auf welchen die Lichtstrahlen 33 resp. 33' bei der Justage der Leisten 17 und 19 auszurichten sind. Es dürfte dem fachkundigen Leser klar sein, dass die Leisten 17 und 19 üblicherweise die gleichen Dimensionen aufweisen und dass die Referenzpunkte und die mit diesen zusammenwirkenden Lichtquellen an exakt denselben Positionen der einander gegenüberliegenden Leisten 17,19 vorgesehen sind. Bei der Lichtschranke gemäss Fig. 2 sind die Lichtquelle 29 und der Referenzpunkt 35 am oberen Ende der Leisten 17 resp. 19, und die Lichtquelle 29' und der Referenzpunkt 35' am unteren Ende der Leisten 17 resp. 19 vorgesehen. Durch diese Anordnung der Lichtquellen 29,29' und der Referenzpunkte 35,35' können zwei zueinander gegenläufige Richtstrahlen 33,33' erzeugt werden, wodurch sich beide Leisten bezüglich der oben erwähnten fünf Freiheitsgrade ausrichten lassen.

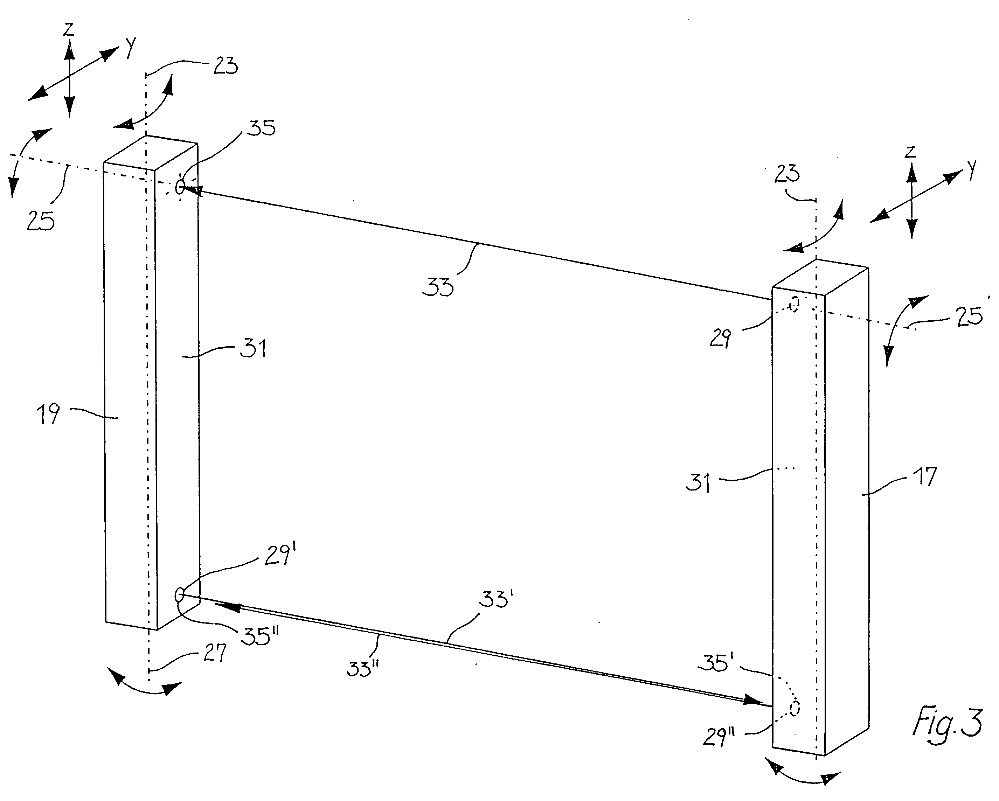

Das zweite Ausführungsbeispiel gemäss Fig. 3 unterscheidet sich von demjenigen von Fig. 2 darin, dass die Senderleiste 17 zwei Lichtquellen 29 und 29'' besitzt. Aus Gründen der Vereinfachung sind gleiche Teile jeweils mit den gleichen Bezugsziffern wie in der Fig. 2 bezeichnet. Die dritte, im Vergleich zum ersten Ausführungsbeispiel zusätzliche Lichtquelle 29'' ist am unteren Ende der Leiste 17 vorgesehen. Der von der Lichtquelle 29' ausgesandte Richtstrahl 33'' ist koaxial mit dem von der gegenüberliegenden Lichtquelle 29' ausgesandten Richtstrahl 33', d.h. die Lichtquelle 29' ist gleichzeitig der durch den Richtstrahl 33'' der Lichtquelle 29'' zu treffende Referenzpunkt, und umgekehrt. Der Vorteil dieser Anordnung liegt darin, dass eine in der Längsachse der Leiste 17 vorhandene Torsion erkennbar ist. Grundsätzlich können nicht nur an der Leiste 17 sondern auch an der Empfängerleiste 19 zwei Lichtquellen vorgesehen sein.

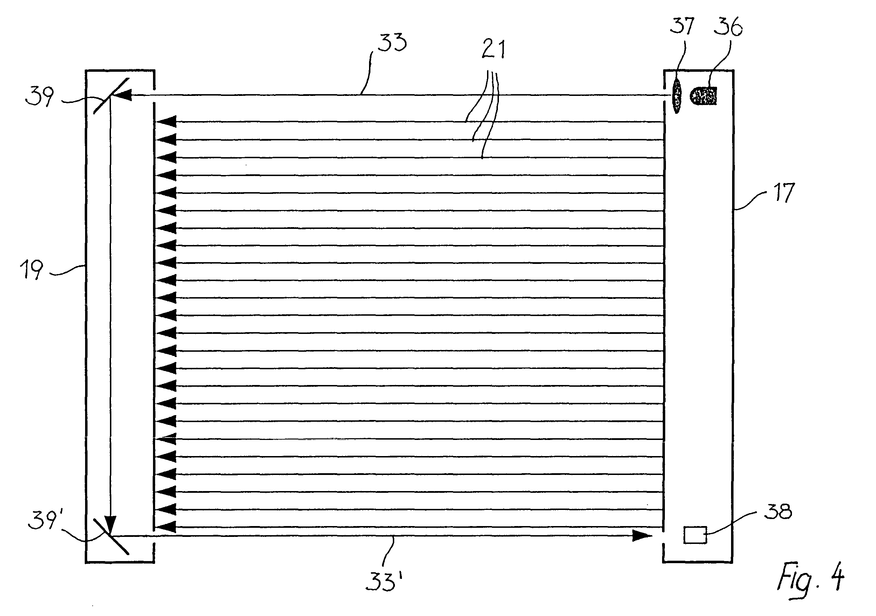

Das erfindungsgemässe Justierverfahren zum Ausrichten zweier Leisten kann aber auch mit nur einer Lichtquelle 29 durchgeführt werden (Fig. 4). Zu diesem Zweck sind eine Laserdiode 36, eine in Abstand von dieser angeordnete Linse 37 zum Fokussieren des ausgesandten Lichtes und zwei in der gegenüberliegenden Leiste 19 angeordnete Umlenkspiegel 39,39' vorgesehen. Mit Hilfe der Umlenkspiegel 39,39' kann der Richtstrahl 33 in Abstand zu diesem als reflektierter Strahl 33' auf die Leiste 17 reflektiert und von einem vorzugsweise positionsempfindlichen Empfänger 38 registriert werden. Alternativ kann eine Markierung an der Leiste 17 vorgesehen sein. Mit dieser Anordnung können alle Freiheitsgrade eingestellt und überwacht werden. Für die praktische Anwendung ist zu beachten, dass die Umlenkspiegel vorteilhaft mit einer Genauigkeit von < 0.1 Grad oder besser ausgerichtet sein sollten, da sich allfällige Winkelfehler bei dieser Anordnung vervierfachen.

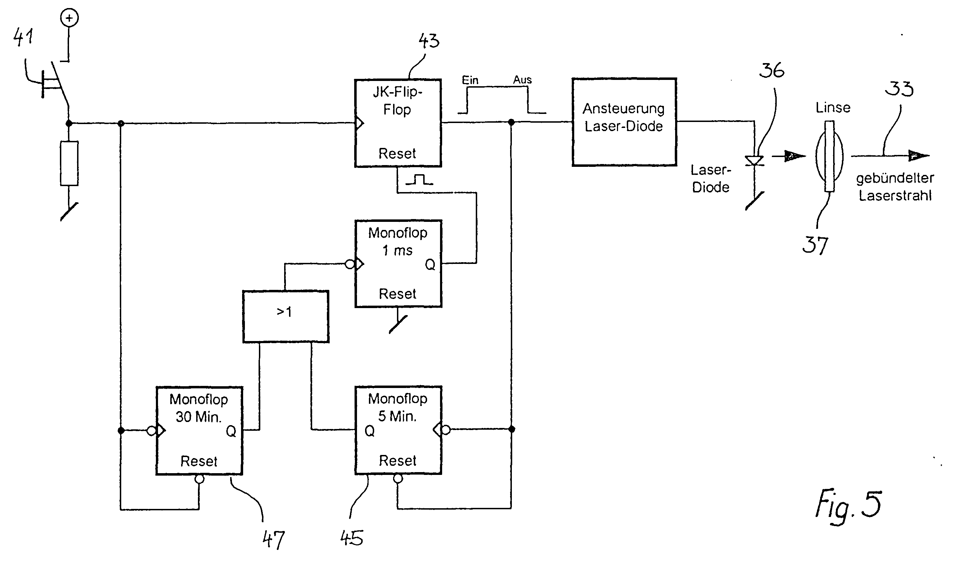

Eine mögliche Schaltung zur Steuerung der Ausrichthilfe ist in der Fig. 5 gezeigt. Mit Bezugsziffer 41 ist ein Schalter bezeichnet, mit welchem durch einmaliges Betätigen ein JK-Flip-Flop 43 betätigt und die Laser-Diode 36 eingeschaltet wird. Durch nochmaliges Betätigen wird die Laser-Diode 36 abgeschaltet. Ein Monoflop 45, welches mit einer Zeitverzögerung von jeweils 5 Minuten schaltet, sorgt dafür, dass für den Fall, dass die Laser-Diode nicht abgeschaltet wurde, das Flip-Flop 43 nach 5 Minuten wieder selbsttätig in den Ausgangszustand zurückkehrt und die Laser-Diode abschaltet. Wird der Schalter in der EIN-Position festgestellt, so sorgt ein weiteres Monoflop 47 dafür, dass sich die Laser-Diode spätestens nach 30 Minuten wieder ausschaltet. Durch diese Schaltung kann die Belastung der Laser-Dioden minimiert und gleichzeitig sichergestellt werden, dass die Laser-Dioden während der Lebensdauer der bei Lichtschranken eingesetzten Photo- und Leuchtdioden nicht ersetzt werden müssen. Andererseits kann die gegenseitige Ausrichtung der beiden Leisten jederzeit durch Betätigen des Schalters überprüft werden.

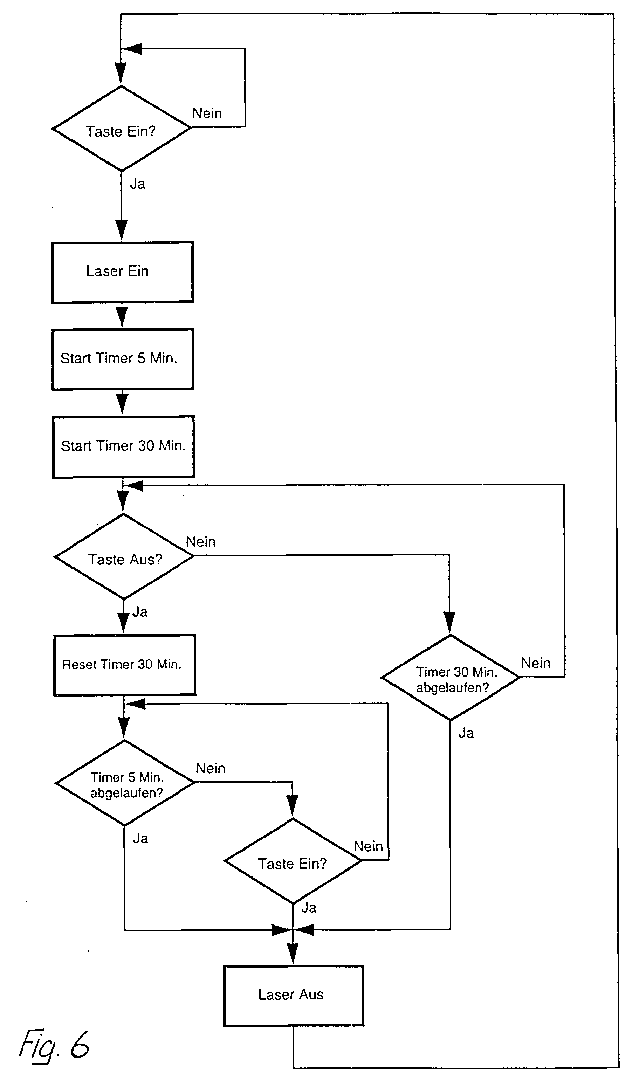

Die Steuerung der Ausrichthilfe kann aber ebensogut durch ein entsprechendes Programm geschehen. Gemäss dem in Fig. 6 dargestellten Flussdiagramm überprüft das Programm kontinuierlich oder in gewissen Zeitabständen, ob der Schalter zum Inbetriebsetzen des Lasers betätigt wird. Sobald der Schalter betätigt wird, wird der Laser eingeschaltet und ein erster Timer mit einer Laufzeit von 5 Minuten und ein zweiter Timer mit einer Laufzeit von 30 Minuten in Gang gesetzt. Anschliessend überprüft das Programm, ob der Schalter wieder zurückgesetzt oder immer noch in der EIN-Position verharrt. Ist der Schalter in der AUS-Position, so wird der zweite Timer zurückgesetzt und anschliessend zugewartet, bis der erste Timer abgelaufen ist. In der Warteschlaufe wird gleichzeitig überprüft, ob der Schalter neuerlich betätigt wird. Ist dies der Fall, so wird der Laser vor Ablauf der 5 Minuten abgeschaltet. Wird der Schalter nicht betätigt, so schaltet der Laser nach Ablauf der 5 Minuten ab.

Wird der Schalter in der EIN-Position arretiert, so verharrt das Programm in einer Warteschlaufe, in welcher überwacht wird, wann die 30 Minuten des zweiten Timers abgelaufen sind. Sobald die vorgegebene Zeit des zweiten Timers abgelaufen ist, wird der Laser ausgeschaltet. Die oben beispielhaft angegebenen Zeitspannen können im Bedarfsfall angepasst werden.

Die beschriebenen soft- und hardwaremässigen Steuerungen stellen sicher, dass die Laser-Lichtquellen nicht über längere Zeit in Betrieb sein können, sondern spätestens nach Ablauf einer zweiten, vorgegebenen Zeitspanne abschalten. Dadurch kann auch dann, wenn unbefugte Dritte den Schalter in der EIN-Position arretieren, z.B. Lausbubenstreich, kein Schaden an den Laser-Lichtquellen entstehen.

Das Ausrichten von zwei einander gegenüberliegenden Leisten mit Sendern und Empfängern kann mit Hilfe von wenigsten zwei gegenläufigen Richtstrahlen rasch und zuverlässig erfolgen, indem die Lage der Leisten zunächst in x und y-Richtung ausgerichtet werden. Dies kann beispielsweise durch das Vorsehen von geeigneten Langlöchern in den Leisten geschehen. Danach kann die Ausrichtung der Leisten bezüglich der Achsen 23,25 und 27 mit Hilfe von Justierschrauben erfolgen. Es sei der Vollständigkeit halber noch erwähnt, dass das Ausrichten der optischen Achsen der Sender 13 und Empfänger 15 bereits im Werk erfolgt. Dabei wird sichergestellt, dass die Sender- und Empfängerkeulen exakt rechtwinklig zu den Stirnflächen 31 der Leisten 17,19 verlaufen. Ebenfalls im Werk werden die Richtstrahlen 33,33' der Laser-Lichtquellen 29,29' rechtwinklig zu den Stirnflächen 31 der Leisten 17,19 ausgerichtet, sodass die Richtstrahlen 33,33' parallel zu den Senderstrahlen 21 und Empfängerkeulen sind. Die Lichtquellen und Referenzpunkte nehmen eine genau definierte Lage bezüglich der Sender resp. der Empfängerelemente ein, sodass durch das Ausrichten der Richtstrahlen 33,33' auf die Referenzpunkte 35,35' die Sender/Empfängerpaare optimal justiert sind.

Die oben beschriebene Ausrichthilfe ist zur Justage von Leisten beliebiger elektrischer oder opto-elektronischer Detektioneinrichtungen geeignet, welche mit miteinander zusammenwirkenden Sendern und Empfänger arbeiten. Die Sender und Empfänger der Lichtschranke oder des Lichtvorhanges können in gleichmässigen oder ungleichmässigen Abständen voneinander angeordnet sein. Als Lichtquellen für die Ausrichthilfe werden vorzugsweise Laser-Lichtquellen, z.B. mit Lichtlängen von 635 nm oder 670 nm, eingesetzt. Andere Lichtquellen, deren Strahlen sich genügend bündeln lassen und welche eine genügende Strahlungsleistung haben, können ebenfalls eingesetzt werden. Bevorzugt ist die Ausrichthilfe in der Lichtschranke integriert.

## Patentansprüche

1. Verfahren zum gegenseitigen geometrischen Ausrichten zweier einander gegenüberliegenden, jeweils ein oder mehrere Sender (13) und Empfänger (15) aufweisenden Leisten einer Lichtschranke oder eines Lichtvorhangs, bei welchem Verfahren wenigstens ein von einer Lichtquelle (29,29') ausgesandter und bezüglich einer ersten Leiste definiert ausgerichteter elektromagnetischer Richtstrahl von der ersten Leiste (17) auf eine der ersten Leiste (17) gegenüberliegend angeordnete zweite Leiste (19) gerichtet, der Auftreffpunkt des Richtstrahls beispielsweise bezüglich eines vorbestimmten Referenzpunktes festgestellt und gegebenenfalls die gegenseitige Ausrichtung der Leisten (17,19) aufeinander abgestimmt wird,
**dadurch gekennzeichnet,**
**dass** zum gegenseitigen Ausrichten der Leisten (17,19) wenigstens zwei zueinander gegenläufige, in Abstand voneinander angeordnete Richtstrahlen (33,33';33,33',33") des sichtbaren Spektralbereichs eingesetzt werden, wobei die Ausrichtung der von den Lichtquellen (29,29';36) ausgesandten Richtstrahlen bezüglich der Leisten (17,19) und den darin aufgenommenen Sendern (13) und Empfängern (15) bereits im Werk erfolgt.

2. Verfahren nach Anspruch 1, **dadurch gekennzeichnet, dass** an der ersten Leiste (17) wenigstens eine erste Lichtquelle (29) des sichtbaren Spektralbereichs und an der zweiten Leiste (19) wenigstens eine zweite Lichtquelle (29') des sichtbaren Spektralbereichs zur Erzeugung von wenigstens zwei zueinander gegenläufigen Richtstrahlen (33,33') derart angeordnet werden, dass die Lichtquellen (29,29') bezüglich der Sender (13) und Empfänger (15) eine definierte Lage einnehmen.

3. Verfahren nach Anspruch 1, **dadurch gekennzeichnet, dass** der Auftreffpunkt der Richtstrahlen (33) resp. (33') mit wenigstens einem jeweils an der gegenüberliegenden Leiste vorgesehen Referenzpunkt (35,35') in Übereinstimmung gebracht wird.

4. Verfahren nach Anspruch 1 oder 2, **dadurch gekennzeichnet, dass** in oder an der ersten Leiste (17) wenigstens eine Lichtquelle (36) und in der zweiten Leiste (19) Umlenkmittel angeordnet werden,
dass die Ausrichtung des von der Lichtquelle (36) ausgesandten Richtstrahls und der Umlenkmittel (39,39') bezüglich der Leisten (17,19) und den darin aufgenommenen Sendern (13) und Empfängern (15) bereits im Werk erfolgt und vor Ort der von der ersten auf die zweite Leiste gerichtete erste Richtstrahl (33) an oder in der zweiten Leiste (19) umgelenkt und in Abstand zum ersten Richtstrahl (33) als zweiter Richtstrahl (33') auf die erste Leiste (17) reflektiert wird.

5. Verfahren nach einem der Ansprüche 1 bis 4, **dadurch gekennzeichnet, dass** wenigstens drei Richtstrahlen (33,33',33"), von denen wenigsten einer (33') gegenläufig zu den beiden anderen Richtstrahlen (33,33") verläuft, eingesetzt werden.

6. Verfahren nach einem der Ansprüche 1 bis 5, **dadurch gekennzeichnet, dass** die Richtstrahlen (33,33',33'') gleichzeitig erzeugt werden und dann die Justage vorgenommen wird.

7. Verfahren nach einem der Ansprüche 1 bis 6, **dadurch gekennzeichnet, dass** die Richtstrahlen (33,33',33'') nach dem Betätigen eines Schalters zum Inbetriebsetzen der wenigstens einen die Richtstrahlen erzeugenden Lichtquelle (29,29') jeweils für eine bestimmte, üblicherweise zum Ausrichten der Leisten (17,19) ausreichend lange erste Zeitspanne in Betrieb bleiben und sich nach Ablaufen der vorerwähnten Zeitspanne wieder selbsttätig ausschalten.

8. Verfahren nach Anspruch 6, **dadurch gekennzeichnet, dass** für den Fall, dass der Schalter permanent in der EIN-Position verharrt, die Richtstrahlen (33,33',33'') spätestens nach einer vorbestimmten zweiten Zeitspanne selbsttätig abgeschaltet werden.

9. Verfahren nach einem der Ansprüche 1 bis 8, **dadurch gekennzeichnet, dass** die Lichtquellen (29,29';36) in den Leisten (17,19) integriert werden.

10. Verfahren nach einem der Ansprüche 1 bis 9, **dadurch gekennzeichnet, dass** die Richtstrahlen (33,33';33,33',33'') der Lichtquelle(n) (29,29';36) parallel zu den Sendekeulen (21) resp. den Empfängerkeulen der Empfänger (15) ausgerichtet werden.

11. Verfahren nach einem der Ansprüche 1 bis 10, **dadurch gekennzeichnet, dass** als Lichtquellen (29,29';36) Laser-Lichtquellen, z.B. mit Lichtlängen von 635 nm oder 670 nm, eingesetzt werden.

12. Verfahren nach einem der Ansprüche 1 bis 11, **dadurch gekennzeichnet, dass** gepulste Lichtquellen oder Lichtquellen mit einem kontinuierlichen oder modulierten Richtstrahl eingesetzt werden.

13. Lichtschranke oder Lichtvorhang mit einer Ausrichthilfe zur gegenseitigen geometrischen Ausrichtung zweier einander gegenüberliegenden, jeweils ein oder mehrere Sender (13) und Empfänger (15) aufweisenden Leisten(17,19), mit einer ersten und einer zweiten jeweils miteinander zusammenwirkende Sender (13) und/oder Empfänger (15) oder Reflektoren aufweisenden Leiste (17,19), und wenigstens einer zur ersten Leiste (17) definiert angeordneten Lichtquelle (29) zum Aussenden eines Richtstrahls (33), einer Speise- und Steuereinheit für die Lichtquelle (29),
**gekennzeichnet durch**
- wenigstens eine an der ersten Leiste (17) angeordneten Lichtquelle (29) des sichtbaren Spektralbereichs zur Erzeugung eines ersten sichtbaren Richtstrahls (33),
an der zweiten Leiste (19) angeordneten Umlenkmitteln (39,39') zum Umlenken des ersten Richtstrahls (33) und zur Erzeugung eines zweiten, gegenläufigen Richtstrahls (33') in Abstand zum ersten Richtstrahl (33); **oder**
- **durch** wenigstens eine erste und eine zweite Lichtquelle (29,29')jeweils des sichtbaren Spektralbereichs, welche an oder in der ersten resp. zweiten Leiste (17,19) angeordnet sind, zur Erzeugung von zwei zueinander gegenläufigen, in Abstand voneinander angeordneten sichtbaren Richtstrahlen (33,33'),
wobei die Lichtquellen (29,29',36) und Umlenkmittel (39,39') ab Werk so angeordnet sind, dass diese bezüglich der Sender (13) und Empfänger (15) eine definierte Lage einnehmen, sodass **durch** Feststellen des Auftreffpunktes des Richtstrahles die gegenseitige Ausrichtung der Leisten(17,19)feststellbar ist.

14. Lichtschranke oder Lichtvorhang nach Anspruch 13, **dadurch gekennzeichnet, dass** die Umlenkmittel (39,39'), beispielsweise Spiegel, Prismen oder gleichwirkende Mittel, in der Leiste angeordnet sind.

15. Lichtschranke oder Lichtvorhang nach Anspruch 13 oder 14, **dadurch gekennzeichnet, dass** die Lichtquelle (29;29';36) eine Laserquelle ist, welche im sichtbaren Spektralbereich arbeitet, dass wenigstens an der ersten oder zweiten Leiste Detektions- oder Anzeigemittel (35,35') zum Feststellen des Auftreffpunkts des ausgesandten oder reflektierten Richtstrahls (33,33') vorgesehen sind, wobei die Detektions- oder Anzeigemittel durch ein Fadenkreuz (35,35') oder eine andere Markierung oder Photosensoren gebildet sind.

16. Lichtschranke oder Lichtvorhang nach einem der Ansprüche 13 bis 15, **dadurch gekennzeichnet, dass** an wenigstens einer Leiste ein Schalter (41), z.B. ein Berührungsschalter, zum Inbetriebsetzen der Ausrichthilfe vorgesehen ist.

17. Lichtschranke oder Lichtvorhang nach einem der Ansprüche 13 bis 16, **dadurch gekennzeichnet, dass** die eine oder alle Lichtquellen (29,29',29") in der oder den Leisten (17,19) integriert sind.

18. Lichtschranke oder Lichtvorhang nach einem der Ansprüche 13 bis 17, **dadurch gekennzeichnet, dass** in der einen Leiste (17) wenigstens zwei Laser-Lichtquellen (29,29'') und in der gegenüberliegenden Leiste (19) wenigstens eine Laser-Lichtquelle (29') integriert sind.

19. Lichtschranke oder Lichtvorhang nach einem der Ansprüche 13 bis 18, **dadurch gekennzeichnet, dass** die Speise- und Steuereinheit für die Ausrichthilfe wenigstens ein erstes Monoflop (45) oder einen Timer aufweist, welche die Ausrichthilfe, nachdem diese durch Betätigen des Schalters (41) in Betrieb gesetzt wurde, nach Ablauf einer bestimmten ersten Zeitspanne abschalten.

20. Lichtschranke oder Lichtvorhang nach einem der Ansprüche 13 bis 19, **dadurch gekennzeichnet, dass** die Speise- und Steuereinheit für die Ausrichthilfe ein zweites Monoflop (47) oder einen zweiten Timer aufweist, welche die Ausrichthilfe nach Ablauf einer bestimmten zweiten Zeitspanne abschalten, auch wenn der Schalter (41) zum Inbetriebsetzen der Lichtquelle permanent in der EIN-Stellung ist.

21. Lichtschranke oder Lichtvorhang gemäss einem der Ansprüche 13 bis 20, **dadurch gekennzeichnet, dass** die zusammenwirkende Sender (13) und Empfänger (15) aufweisenden Leisten(17,19) als elektrische oder optoelektronische Detektionseinrichtungen eingesetzt werden.

22. Lichtschranke oder Lichtvorhang gemäss einem der Ansprüche 13 bis 21, **dadurch gekennzeichnet, dass** wenigstens an der ersten oder zweiten Leiste Detektions- oder Anzeigemitteln vorgesehen sind zum Feststellen des Auftreffpunkts des ausgesandten oder reflektierten Richtstrahls, sodass durch das Ausrichten der Richtstrahlen (33,33') auf die Detektions- oder Anzeigemittel (35,35') die Sender/Empfängerpaare gegeneinander ausgerichtet werden.

23. Verfahren nach einem der Ansprüche 1 bis 12, **dadurch gekennzeichnet, dass** der Auftreffpunkt des jeweiligen Richtstrahls (33,33';33,33',33'') mittels Detektions- oder Anzeigemittel festgestellt wird.

## Claims

1. Process for the mutual, geometrical alignment of two opposing rails of a light barrier or light curtain, each having one or more transmitters (13) and receivers (15), in which process at least one electromagnetic directional beam emitted from a light source (29, 29') and specifically aligned with reference to a first rail is aligned from the first rail (17) to a second rail (19) arranged opposite the first rail (17), the point of incidence of the directional beam is determined with reference to a predetermined reference point, for example, and if necessary the mutual alignment of the rails (17, 19) is matched,
**characterised in that**
for the mutual alignment of the rails (17, 19), at least two directional beams (33, 33'; 33, 33', 33'') of the visible spectral region, travelling in opposite directions to each other, arranged at a distance from each other, are used, wherein the alignment of the directional beams emitted by the light sources (29, 29'; 36) with reference to the rails (17, 19) and the transmitters (13) and receivers (15) contained therein, is carried out at the factory.

2. Process according to Claim 1, **characterised in that** at least one first light source (29) of the visible spectral region is arranged at the first rail (17) and at least one second light source (29') of the visible spectral region is arranged at the second rail (19) to generate at least two directional beams (33, 33') travelling in opposite directions to each other, in such a way that the light sources (29, 29') adopt a defined position with respect to the transmitters (13) and the receivers (15).

3. Process according to Claim 1, **characterised in that** the point of incidence of the directional beams (33) and (33'), respectively, are brought into coincidence with at least one respective reference point (35, 35') provided at the opposite rail.

4. Process according to Claim 1 or 2, **characterised in that** at least one light source (36) is arranged in or at the first rail (17) and deflection means are arranged in the second rail (19), that the alignment of the directional beam emitted by the light source (36) and of the deflection means (39, 39') with reference to the rails (17, 19) and the transmitters (13) and receivers (15) contained therein, is already carried out at the factory and the first directional beam (33) that is locally directed from the first to the second rail is deflected at or in the second rail (19) and is reflected back to the first rail (17) as a second directional beam (33') at a distance to the first directional beam (33).

5. Process according to one of Claims 1 to 4, **characterised in that** at least three directional beams (33, 33', 33") are used, of which at least one (33') travels in the opposite direction to the other two directional beams (33, 33'').

6. Process according to one of Claims 1 to 5, **characterised in that** the directional beams (33, 33', 33'') are generated simultaneously and the adjustment is then carried out.

7. Process according to one of Claims 1 to 6, **characterised in that** following the actuation of a switch to put the at least one light source (29, 29') generating the directional beams into service, each of the directional beams (33, 33', 33") remains operative for a specific first time period that is usually long enough for the alignment of the rails (17, 19), and switches itself off again automatically on expiry of the afore-mentioned time period.

8. Process according to Claim 6, **characterised in that** in the case where the switch permanently remains in the ON position, the directional beams (33, 33', 33'') are switched off automatically at least after a predetermined second time period.

9. Process according to one of-Claims 1 to 8, **characterised in that** the light sources (29, 29'; 36) are integrated in the rails (17, 19).

10. Process according to one of Claims 1 to 9, **characterised in that** the directional beams (33, 33'; 33, 33' 33") of the light source(s) (29, 29'; 36) are aligned parallel to the transmit lobes (21) or to the receive lobes of the receiver (15), respectively.

11. Process according to one of Claims 1 to 10, **characterised in that** laser light sources, for example having light wavelengths of 635 nm or 670 nm, are used as light sources (29, 29'; 36).

12. Process according to one of Claims 1 to 11, **characterised in that** pulsed light sources or light sources having a continuous or modulated directional beam are used.

13. Light barrier or light curtain with an alignment aid for the mutual, geometrical alignment of two opposing rails (17, 19), each having one or more transmitters (13) and receivers (15), with a first and a second rail (17, 19) each having transmitters (13) and/or receivers (15) or reflectors acting in combination, and at least one light source (29) in a defined arrangement with respect to the first rail (17), for emitting a directional beam (33), and at least one power supply and control unit for the light source (29),
**characterised by**
- at least one light source (29) of the visible spectral region arranged at the first rail (17), for generating a first visible directional beam (33), deflection means (39, 39') arranged at the second rail (19) for deflecting the first directional beam (33) and for generating a second directional beam (33') travelling in the opposite direction, at a distance from the first directional beam (33); **or**
- at least one first and one second light source (29, 29') of the visible spectral region in each case, which are arranged at or in the first or second rail (17, 19), respectively, for the generation of two visible directional beams (33, 33') travelling in opposite directions to each other, arranged at a distance from each other, wherein the light sources (29, 29', 36) and deflection means (39, 39') are arranged ex works so that these adopt a defined position with respect to the transmitters (13) and the receivers (15), so that the mutual alignment of the rails (17, 19) can be determined by setting the point of incidence of the directional beam.

14. Light barrier or light curtain according to Claim 13, **characterised in that** the deflection means (39, 39'), for example mirrors, prisms or means acting in the same manner, are arranged in the rail.

15. Light barrier or light curtain according to Claim 13 or 14, **characterised in that** the light source (29; 29'; 36) is a laser source which operates in the visible spectral region, that detection or indicating means (35, 35') for determining the point of incidence of the emitted or reflected directional beam (33, 33'), are provided at least at the first or second rail, wherein the detection or indicating means are formed by a graticule (35, 35') or other mark, or photosensors.

16. Light barrier or light curtain according to one of Claims 13 to 15, **characterised in that** a switch (41), for example a proximity switch, for putting the alignment aid into service, is provided at at least one rail.

17. Light barrier or light curtain according to one of Claims 13 to 16, **characterised in that** the one light source or all light sources (29, 29', 29'') are integrated in the rail or rails (17, 19).

18. Light barrier or light curtain according to one of Claims 13 to 17, **characterised in that** at least two laser light sources (29, 29'') are integrated in the one rail (17) and at least one laser light source (29') is integrated in the opposite rail (19).

19. Light barrier or light curtain according to one of Claims 13 to 18, **characterised in that** the power supply and control unit for the alignment aid has at least one first monostable multivibrator (45) or a timer, which switches off the alignment aid on the expiry of a specific first time period, after this alignment aid has been put into service by actuation of the switch.

20. Light barrier or light curtain according to one of Claims 13 to 19, **characterised in that** this power supply and control unit for the alignment aid has a second monostable multivibrator (47) or a second timer, which switch off the alignment aid on the expiry of a specific second time period, even if the switch (41) for putting the light source into service is permanently in the ON position.

21. Light barrier or light curtain according to one of Claims 13 to 20, **characterised in that** the rails (17, 19) having transmitters (13) and receivers (15) acting in combination are used as electrical or optoelectronic detection devices.

22. Light barrier or light curtain according to one of Claims 13 to 21, **characterised in that** detection or indicating means are provided at the first or second rail to determine the point of incidence of the emitted or reflected directional beam, so that the transmitter/receiver pairs are aligned with each other by the alignment of the directional beams (33, 33') on the detection or indicating means (35, 35').

23. Process according to one of Claims 1 to 12, **characterised in that** the point of incidence of the respective directional beam (33, 33'; 33, 33', 33'') is determined by means of detection or indicating means.

## Revendications

1. Procédé d'alignement géométrique réciproque de deux barrettes d'une barrière lumineuse ou d'un rideau lumineux, ces barrettes étant placées l'une en face de l'autre et comprenant chacune, respectivement, un ou plusieurs émetteurs (13) et récepteurs (15), procédé dans lequel au moins un faisceau dirigé, électromagnétique et aligné de façon définie, émis depuis une source lumineuse (29, 29') et concernant une première barrette, dirigé depuis la première barrette (17) jusqu'à une seconde barrette (19) disposée en face de la première barrette (17), où le point d'impact du faisceau dirigé est déterminé, par exemple concernant un point de référence prédéfini, l'alignement réciproque des barrettes (17, 19), l'une par rapport à l'autre, étant le cas échéant mis au point,
**caractérisé en ce que**, pour l'alignement réciproque des barrettes (17, 19), on utilise au moins deux faisceaux dirigés (33, 33' ; 33, 33', 33") du domaine spectral visible, ces faisceaux se déplaçant en sens contraire l'un par rapport à l'autre et à distance l'un de l'autre, où l'alignement des faisceaux dirigés, émis à partir des sources lumineuses (29, 29' ; 36), concernant les barrettes (17, 19) et les émetteurs (13) et les récepteurs (15) captés dans les barrettes, est déjà réalisé en usine.

2. Procédé selon la revendication 1, **caractérisé en ce que**, au niveau de la première barrette (17), au moins une première source lumineuse (29) du domaine spectral visible et, au niveau de la seconde barrette (19), au moins une seconde source lumineuse (29') du domaine spectral visible, servant à produire au moins deux faisceaux dirigés (33, 33') en sens contraire l'un par rapport à l'autre, sont disposées de façon telle, que les sources lumineuses (29, 29'), concernant les émetteurs (13) et les récepteurs (15), prennent une position définie.

3. Procédé selon la revendication 1, **caractérisé en ce que** l'on fait coïncider le point d'impact des faisceaux dirigés (33) et (33') avec au moins un point de référence (35, 35') prévu au niveau de chacune des barrettes placées l'une en face de l'autre.

4. Procédé selon la revendication 1 ou 2, **caractérisé en ce que** au moins une source lumineuse (36) est disposée dans ou sur la première barrette (17) et que des moyens déflecteurs sont disposés dans la seconde barrette (19),
**en ce que** l'alignement du faisceau dirigé, émis depuis la source lumineuse (36), et des moyens déflecteurs (39, 39'), concernant les barrettes (17, 19) et les émetteurs (13) et les récepteurs (15) captés dans ces barrettes, est déjà réalisé en usine, et **en ce que**, sur place, le premier faisceau (33), dirigé depuis la première barrette jusqu'à la seconde barrette, est dévié sur ou dans la seconde barrette (19), et **en ce que** ce premier faisceau dirigé est réfléchi sur la première barrette (17) comme second faisceau dirigé (33') à distance du premier faisceau dirigé (33).

5. Procédé selon l'une quelconque des revendications 1 à 4,
**caractérisé en ce que** l'on utilise au moins trois faisceaux dirigés (33, 33', 33") dont au moins un faisceau dirigé (33') se déplace dans un sens opposé à celui des deux autres faisceaux dirigés (33, 33").

6. Procédé selon l'une quelconque des revendications 1 à 5,
**caractérisé en ce que** les faisceaux dirigés (33, 33', 33") sont produits simultanément, l'alignement étant réalisé ensuite.

7. Procédé selon l'une quelconque des revendications 1 à 6,
**caractérisé en ce que** les faisceaux dirigés (33, 33', 33"), après avoir actionné un commutateur pour la mise en service d'au moins une des sources lumineuses (29, 29') produisant les faisceaux dirigés, restent en fonctionnement pendant un premier laps de temps déterminé, suffisamment long, servant habituellement à l'alignement des barrettes (17, 19),
lesquels faisceaux dirigés s'arrêtent à nouveau automatiquement, une fois que le laps de temps mentionné précédemment s'est écoulé.

8. Procédé selon la revendication 6, **caractérisé en ce que**, au cas où le commutateur reste en permanence sur la position MARCHE, les faisceaux dirigés (33, 33', 33") sont interrompus automatiquement au plus tard après un second laps de temps prédéterminé.

9. Procédé selon l'une quelconque des revendications 1 à 8,
**caractérisé en ce que** les sources lumineuses (29, 29' ; 36) sont intégrées aux barrettes (17, 19).

10. Procédé selon l'une quelconque des revendications 1 à 9,
**caractérisé en ce que** les faisceaux dirigés (33, 33' ; 33, 33', 33'') de la source lumineuse ou des sources lumineuses (29, 29' ; 36) sont alignés en étant parallèles aux lobes (21) d'émission ou aux lobes de réception des récepteurs (15).

11. Procédé selon l'une quelconque des revendications 1 à 10,
**caractérisé en ce que** l'on utilise, comme sources lumineuses (29, 29' ; 36), des sources lumineuses laser ayant par exemple des longueurs d'onde lumineuse de 635 nm ou de 670 nm.

12. Procédé selon l'une quelconque des revendications 1 à 11,
**caractérisé en ce que** l'on utilise des sources lumineuses pulsées ou des sources lumineuses comportant un faisceau dirigé continu ou modulé.

13. Barrière lumineuse ou rideau lumineux comprenant un auxiliaire d'alignement concernant l'alignement géométrique réciproque de deux barrettes (17, 19) placées l'une en face de l'autre et comportant chacune un ou plusieurs émetteurs (13) et récepteurs (15), comprenant une première et une seconde barrettes (17, 19) comportant chacune des émetteurs (13) et/ou des récepteurs (15) ou des réflecteurs fonctionnant les uns avec les autres, comprenant au moins une source lumineuse (29) disposée en étant définie par rapport à la première barrette (17), cette source lumineuse servant au rayonnement d'un faisceau dirigé (33), et comprenant une unité de mémoire et de commande pour la source lumineuse (29),
**caractérisé en ce que**
- au moins une source lumineuse (29) du domaine spectral visible est disposée au niveau de la première barrette (17) et sert à produire un premier faisceau dirigé visible (33),
**en ce que** des moyens déflecteurs (39, 39') sont disposés sur la seconde barrette (19) et servent à dévier le premier faisceau dirigé (33) et à produire un second faisceau dirigé (33') se déplaçant en sens contraire et à distance du premier faisceau dirigé (33) ; ou **caractérisé**
- **par** au moins une première et une seconde sources lumineuses (29, 29'), chacune faisant partie du domaine spectral visible, lesquelles sources lumineuses sont disposées sur ou dans la première et la seconde barrettes (17, 19), pour produire deux faisceaux dirigés visibles (33, 33') se déplaçant en sens contraire l'un par rapport à l'autre et à distance l'un de l'autre, où les sources lumineuses (29, 29', 36) et les moyens déflecteurs (39, 39') sont disposés à la sortie d'usine de façon telle, que ces sources lumineuses, concernant les émetteurs (13) et les récepteurs (15), prennent une position définie, de sorte qu'en constatant le point d'impact du faisceau dirigé, on peut déterminer l'alignement réciproque des barrettes (17, 19).

14. Barrière lumineuse ou rideau lumineux selon la revendication 13, **caractérisé en ce que** les moyens déflecteurs (39, 39'), par exemple des miroirs, des prismes ou des moyens agissant de façon similaire, sont disposés dans la barrette.

15. Barrière lumineuse ou rideau lumineux selon la revendication 13 ou 14, **caractérisé en ce que** la source lumineuse (29, 29' ; 36) est une source laser qui fonctionne dans le domaine spectral visible, **en ce qu'**il est prévu, au moins au niveau de la première ou de la seconde barrette, des moyens de détection ou des moyens indicateurs (35, 35') servant à déterminer le point d'impact du faisceau dirigé (33, 33') émis ou réfléchi, où les moyens de détection ou les moyens indicateurs sont constitués par un réticule (35, 35') ou par un autre marquage ou par des photocapteurs.

16. Barrière lumineuse ou rideau lumineux selon l'une quelconque des revendications 13 à 15, **caractérisé en ce qu'**il est prévu, au moins au niveau d'une barrette, un commutateur (41), par exemple un commutateur de contact pour la mise en service de l'auxiliaire d'alignement.

17. Barrière lumineuse ou rideau lumineux selon l'une quelconque des revendications 13 à 16, **caractérisé en ce que** l'une des sources lumineuses ou toutes les sources lumineuses (29, 29', 29'') sont intégrées à la barrette ou aux barrettes (17, 19).

18. Barrière lumineuse ou rideau lumineux selon l'une quelconque des revendications 13 à 17, **caractérisé en ce que** au moins deux sources lumineuses laser (29, 29'') sont intégrées à la barrette (17) et **en ce que** au moins une source lumineuse laser (29') est intégrée à la barrette (19) faisant face à l'autre barrette.

19. Barrière lumineuse ou rideau lumineux selon l'une quelconque des revendications 13 à 18, **caractérisé en ce que** l'unité de mémoire et de commande comprend, pour l'auxiliaire d'alignement, au moins une première bascule monostable (45) ou une horloge à minuterie qui, une fois qu'un premier laps de temps défini s'est écoulé, arrête l'auxiliaire d'alignement mis en service après avoir actionné le commutateur (41).

20. Barrière lumineuse ou rideau lumineux selon l'une quelconque des revendications 13 à 19, **caractérisé en ce que** l'unité de mémoire et de commande comprend, pour l'auxiliaire d'alignement, une seconde bascule monostable (47) ou une seconde horloge à minuterie qui arrête l'auxiliaire d'alignement après qu'un second laps de temps déterminé se soit écoulé, même si le commutateur (41) servant à la mise en service de la source lumineuse est en permanence sur la position MARCHE.

21. Barrière lumineuse ou rideau lumineux selon l'une quelconque des revendications 13 à 20, **caractérisé en ce que** les barrettes (17, 19), comportant des émetteurs (13) et des récepteurs (15) fonctionnant ensemble, sont utilisées comme des dispositifs de détection électriques ou optoélectroniques.

22. Barrière lumineuse ou rideau lumineux selon l'une quelconque des revendications 13 à 21, **caractérisé en ce qu'**il est prévu, au moins au niveau de la première ou de la seconde barrette, des moyens de détection ou des moyens indicateurs servant à déterminer le point d'impact du faisceau dirigé émis ou réfléchi, de sorte qu'en alignant les faisceaux dirigés (33, 33') sur les moyens de détection ou sur les moyens indicateurs (35, 35'), les paires d'émetteurs/récepteurs sont alignées les unes par rapport aux autres.

23. Procédé selon l'une quelconque des revendications 1 à 12,
**caractérisé en ce que** le point d'impact du faisceau dirigé respectif (33, 33' ; 33, 33', 33'') est déterminé par des moyens de détection ou des moyens indicateurs.
